# EUROPEAN PATENT SPECIFICATION

(11) **EP 1 370 079 B1**
(45) Date of publication and mention of the grant of the patent: **18.11.2009**
(21) Application number: 03253609.6
(22) Date of filing: 06.06.2003
(51) Int. Cl.: H04N 5/445

(54) **Method and system for performing actions related to programming in an electronic program guide**
Verfahren und System zur Durchführung von Aktionen, die mit einem Programminhalt in einer elektronischen Programmführung verbunden sind
Méthode et système pour réaliser des actions associées à une programmation dans un guide électronique de programmes

(30) Priority: 07.06.2002 US 165819
(43) Date of publication of application: 10.12.2003
(73) Proprietor: AT & T Broadband, Englewood, Colorado 80112 (US)
(72) Inventor: Marics, Monica, Colorado 80302 (US); Somers, Patricia, Colorado 80304 (US)
(74) Representative: W.P. Thompson & Co.

(56) References cited:
- WO-A-00/28734
- WO-A-97/42763
- WO-A2-00/04706
- WO-A2-01/78382
- US-B1- 6 357 043

## Description

### BACKGROUND OF THE INVENTION

### 1. Field of the Invention

This invention relates to a method and system for performing actions related to programming in an electronic program guide (EPG).

### 2. Background Art

To select a program to view, many television viewers simply "channel surf", or sequentially view each channel, until they find a channel that has a desirable program. However, as the number of available channels continues to grow, channel surfing has become an increasingly inefficient method for viewers to find the type of program they want to watch. Instead, most viewers prefer a more direct method for selecting a program to view and obtaining information regarding the selected program.

Some cable television networks dedicate a specific channel to serve as an electronic program guide. Alternatively, an electronic program guide can be superimposed over a current channel as described, for example, in U.S. Patent No. 5,635,978 issued to Alten et al. Typically, one standard program guide is provided for all viewers or subscribers to a network. These electronic program guides are usually time-based and are scrolled continuously or periodically. Since only a few channels can be displayed at once, the time for completing one cycle of the channels can be considerable.

With such a wide range of programs offered, individual viewers usually prefer selected subsets of the available programming. To meet this need, customized electronic program guides have been developed in which the on-screen display includes programs from only a specific content category or a list of programs on favorite channels. See, for example, U.S. Patent No. 5,596,373 issued to White et al., U.S. Patent No. 5,694,176 issued to Bruette et al., and U.S. Patent No. 5,758,259 issued to Lawler. Such specialized program guides limit somewhat the amount of information viewers must sift through to select a program. However, current electronic program guides still typically require the viewer to explicitly request more information about a program to aid in their selection decision.

WO00/28734 discloses an interactive television program guide having interactive information display screens which may be accessed by selecting an item and which may include detailed information on the selected item or package and may include user-selectable options such as program guide features which have been configured to be exercised in specific connection to the selected item. The user-selectable options which are displayed depend on which program guide features are available to be exercised in specific connection with the selected item and depend on information which is associated with the selected item..

In addition, people increasingly "surf" the Internet and watch television at the same time. Since the Internet contains a vast amount of information on virtually any subject, viewers may wish to see information related to the topic of the particular programming they are watching. In some instances, video programming references a related web site or contact e-mail address through a text display or voice-over.
However, viewers may not remember the Internet address correctly and thus fail to ever reach the referenced web site or e-mail address. Therefore, a need exists to allow viewers to more easily and accurately perform such actions for programs of their choosing.

### SUMMARY OF THE INVENTION

It is an object according to the present invention to provide a method and system which allow a user to perform an action on a television or Internet access apparatus based on content in an electronic program guide.

It is a further object according to the present invention to provide a method and system which allow a user to access a web site or e-mail address associated with a selected program in an electronic program guide.

It is another object according to the present invention to provide a method and system which make electronic program guides easier to navigate.

In accordance with a first aspect of the present invention there is provided a method for performing actions related to programming in an electronic program guide (EPG) for programs stored at one or more of a plurality of locations, the method comprising:
receiving a signal indicating the user's selection of a program displayed in the EPG;
receiving a signal specifying an action command to be applied to the selected program, the action command including determining if a plurality of stored copies of the selected program are available at one or more of the said locations;
accessing at least one database for determining one or more locations of stored copies of the selected program available from PVR devices from owners other than the user; and
displaying a content window for the selected program which includes source information from each location for selecting and viewing stored copies of the selected program, such that the user can select a specific stored copy of the selected program from a specific location for viewing.

In accordance with the present invention, displaying the content window can include providing a browser for displaying a web site related to the selected program, or it can include providing an e-mail client for sending an electronic mail to an address related to the selected program.

In a preferred embodiment, the method of the present invention further includes receiving a signal specifying a subset of programming to be displayed in the EPG, such as a desired date, time range, or chanel of programming, and displaying the desired programming subset. Still further, the method of the present invention can include receiving a signal specifying a user preference for displaying EPG information, such as the desire to display a program description, and displaying the EPG according to the user preference.

In further accordance with the present invention, a method is provided for performing actions related to programming in an EPG. The method includes receiving a signal specifying a subset of programming to be displayed in the EPG and displaying the desired programming subset in the EPG. The method further includes receiving a signal indicating the selection of a specific program displayed in the EPG. Still further, the method includes receiving a signal specifying an action command to be applied to the selected program and displaying a content window corresponding to the action command.

In accordance with a second aspect of the present invention there is provided a system for performing actions related to programming in an electronic program guide (EPG) for programs stored at one or more of a plurality of locations, the system comprising:
a viewer input apparatus operable to generate signals indicating the user's selection of a program displayed in the EPG and an action command to be applied to the selected program, the action command including determining if a plurality of stored copies of the selected program are available at one or more of the said locations;
a set-top box in communication with the viewer input apparatus and operable to receive program signals from a programming source, the program signals including EPG data, wherein the set-top box includes a program receiver to receive the program signals, a viewer input receiver for receiving signals from the viewer input apparatus, and a processor in communication with the program receiver and the viewer input receiver to determine an appropriate content window to be displayed for the selected program; and
at least one database in communication with the processor including one or more locations of stored copies of the selected program available from PVR devices from owners other than the user;
the content window including source information from each location for selecting and viewing stored copies of the selected program, such that the user can select a specific stored copy of the selected program from a specific location for viewing.

According to a preferred embodiment of the present invention, the set-top box includes a program database for storing program data to be displayed in the EPG. The set-top box preferably further includes a tuner operable to tune the program receiver to the selected program and a decoder in communication with the viewer input receiver and the processor. The set-top box can also include a personal video recorder (PVR) and a URL decoder in communication with the program receiver. The display can include a television or, alternatively, can include an Internet access apparatus, such as a personal computer or a web tablet. The system further includes a modem in communication with the set-top box or with the Internet access device. The viewer input apparatus can include a remote controller or, alternatively, can include a keyboard in communication with the Internet access apparatus.

The above objects and other objects, features, and advantages of the present invention are readily apparent from the following detailed description of the best mode for carrying out the invention when taken in connection with the accompanying drawings.

### BRIEF DESCRIPTION OF THE DRAWINGS

FIGURE 1 is a flow diagram outlining the method according to the present invention;
FIGURE 2 is a block diagram providing an overview of a preferred embodiment of the system of the present invention; and
FIGURE 3 is a block diagram showing a more detailed view of the components of the set-top box of FIG. 2.

### DETAILED DESCRIPTION OF THE PREFERRED EMBODIMENT(S)

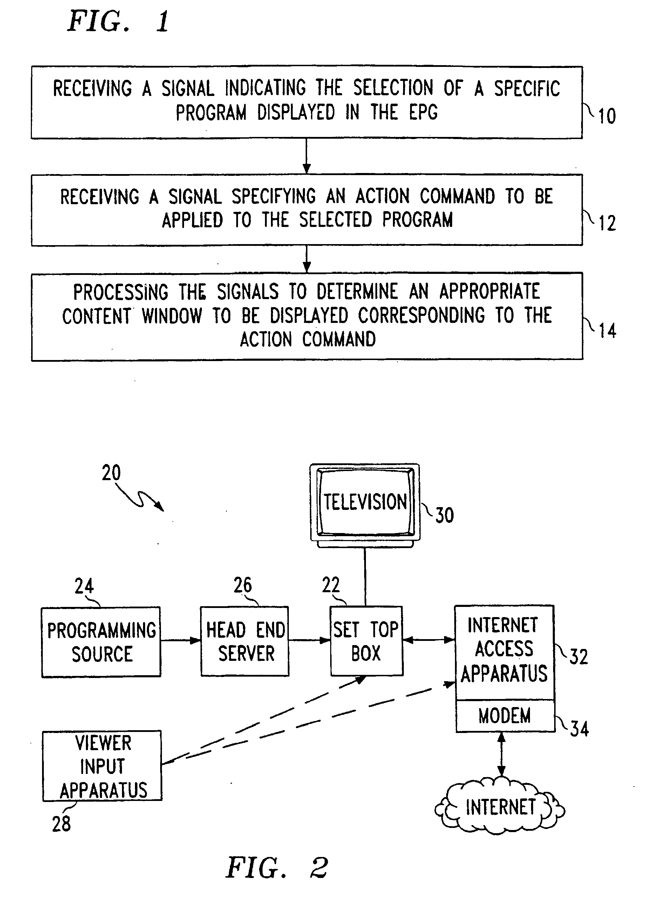

Referring first to FIG. 1, a flow diagram outlining the method according to the present invention of performing actions related to programming in an electronic program guide (EPG) is illustrated. The method includes receiving (10) a signal indicating the selection of a specific program displayed in the EPG and receiving (12) a signal specifying an action command to be applied to the selected program. The method further includes processing (14) the signals to determine an appropriate content window to be displayed corresponding to the action command. As described below, the method of the present invention can also include receiving user preferences for displaying programs in the EPG prior to specifying a selected program.

A preferred embodiment of a system 20 for carrying out the method of the present invention is depicted in the block diagram of FIG. 2. System 20 includes a set-top box 22 that is constructed to receive program signals from a programming source 24, such as a cable television network, via a head-end server 26. Program signals include video signals, audio signals, and program information including EPG data for all channels available on the cable television network. The program signals can be transmitted from programming source 24 to set-top box 22 over a public or private network in analog, digital, or digitally compressed formats via such methods as a television broadcast, analog and digital cable, satellite, Internet, or telephony. However, it is understood that the system and method of the present invention are not dependent upon the particular means of transmission or reception.

Set-top box 22 is responsive to input signals generated by a viewer input apparatus 28, such as a remote controller. Input signals from viewer input apparatus 28 indicate the selection of a specific program displayed in the EPG and an action command to be applied to the selected program. Viewer input apparatus 28 is preferably provided with conventional remote controller function keys, such as power, volume, channel, and 0-9 digit keys among others, and functions in a conventional manner, transmitting signals via infrared, radio frequency, or other signaling technology. Of course, another type of viewer input apparatus 28, such as a computer keyboard, could be used to practice the present invention.

Still referring to FIG. 2, one or more displays are provided in communication with set-top box 22 for displaying the selected television program, the EPG, and the content window corresponding to the action command. The display can include a television 30 and additionally can include an Internet access apparatus 32, such as a personal computer, web tablet, PDA, cellular telephone, or Internet appliance. Set-top box 22 is operable to receive program signals from programming source 24 and to broadcast a display signal representing the selected program to television 30. The system further includes a modem 34 in communication with Internet access apparatus 32 for establishing a connection to the Internet. This connection can be initiated by the user or can be maintained continuously, termed an "always on" Internet connection.

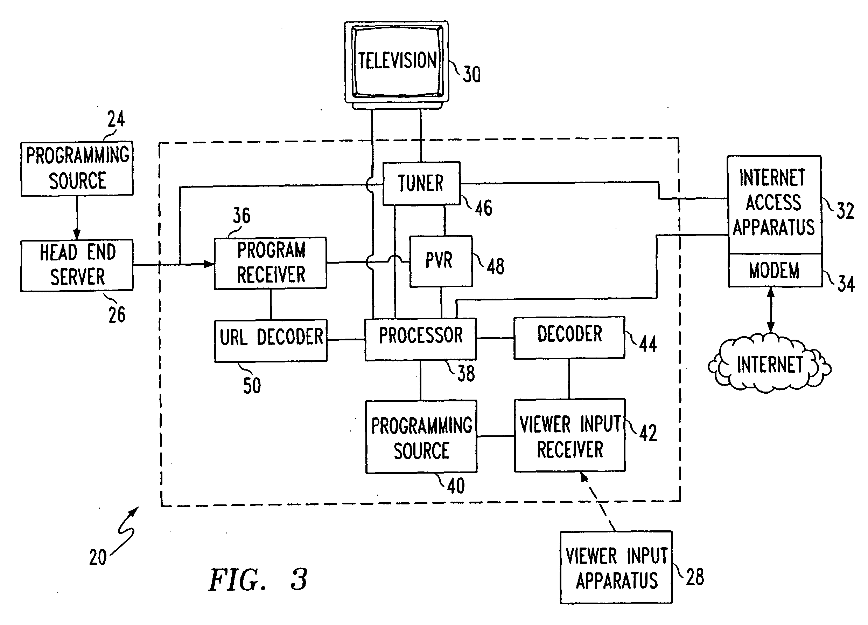

Referring now to FIG. 3, a more detailed view of the components of set-top box 22 is shown. Set-top box 22 includes a program receiver 36 which operates to receive program signals from programming source 24 via head-end server 26 for all channels to which a particular viewer has access. Set-top box 22 further includes a processor 38 in communication with program receiver 36 and a program database 40. Under the control of processor 38, program information received by program receiver 36 is stored in program database 40 for display in the EPG. The program information is preferably downloaded from head-end server 26 to set-top box 22 using a prearranged schedule, for example, at 2 a.m. each morning for the next day's programming.

As shown in FIG. 3, set-top box 22 is also provided with a viewer input receiver 42 for receiving input signals from viewer input apparatus 28 indicative of an action command and a decoder 44 for converting the input signals to digital information for delivery to processor 38. In this way, processor 38 can determine an appropriate content window to be displayed based upon the action command. In a preferred embodiment, viewer input receiver 42 is an infrared receiver. In addition, set-top box 22 is provided with a tuner 46 for tuning program receiver 36 to the selected program. Set-top box 22 may also optionally contain a modem (not shown) for connection to the Internet, and a personal video recorder (PVR) 48. Of course, as an alternative to the separate housing of set-top box 22, system components could be included in another signal reception or processing device, such as a satellite receiver, a television receiver, or a VCR.

In operation, the EPG is displayed on television 30 or Internet access apparatus 32 based on EPG data received in the program signals and stored in program database 40. According to the present invention, the user then selects a program in the EPG and selects an action command to apply to that program. The program and action command may be selected via buttons on viewer input apparatus 28, via an on-screen menu, or via a keyboard in communication with Internet access apparatus 32. If the user makes selections via Internet access apparatus 32, appropriate instructions are sent to set-top box 22. A content window is then displayed which corresponds to the action command.

In accordance with the present invention, displaying the content window can include providing a browser for displaying a web site related to the selected program or providing an e-mail client for sending an electronic mail to an address related to the selected program. Set-top box 22 or Internet access apparatus 32 retrieves the relevant Internet address from the program signal and then displays a browser or e-mail client with that address. More particularly, uniform resource locators (URLs), which designate particular Internet addresses, can be embedded in a program signal by the broadcaster or content owner. The Internet addresses can be embedded in the vertical blanking interval (VBI) of the program signal or, alternatively, in the horizontal portion of the program signal, the close captioning of the program signal, an audio channel, a digital data field, or in any other part of the program signal in such a manner as not to interfere with the displayed video and audio.

Set-top box 22 is provided in communication with a URL decoder 50 (FIG. 3) which is operable to extract the one or more embedded Internet addresses and provide the addresses to processor 38. URL decoder 50 may either be a stand-alone unit, integrated within set-top box 22 as depicted herein, or implemented as a card provided in Internet access apparatus 32. The details of the construction of such a decoder are well known in the art and need not be described in further specificity herein. Upon receiving the action command, Internet access apparatus 32 establishes a communication link with the web site through transmission of a signal containing the selected Internet address. Processor 38 and/or Internet access apparatus 32 includes platform independent software, such as JAVA, to present web pages and e-mail clients to the user.

According to the present invention, an action command can also initiate the display of a content window which includes information for viewing a stored copy of the selected program, such as the source and cost for accessing the stored copy. To view a stored copy of the selected program, set-top box 22 or Internet access apparatus 32 should be able to access a database of locations of stored copies. This may include a record on set-top box 22 of copies stored therein within PVR 48, a database in the network of copies made available by the cable television provider, or a database of copies made available by other PVR owners. Set-top box 22 or Internet access apparatus 32 determines whether a stored copy is available, displays related information such as source and cost in a content window, and allows the user select from the available stored copies.

As is known in the art, an EPG displays a grid of programming for a time period and set of channels. In a preferred embodiment, the method of the present invention further includes receiving a signal specifying a particular subset of programming to be displayed in the EPG, such as a desired date, time range, or channels of programming, and displaying the desired programming subset. In this way, the user can specify criteria instructing the EPG grid to jump immediately to the corresponding programming content, obviating the need to scroll through the entire EPG to find the information of interest to the user and thus making the EPG easier to navigate. The user could select these criteria from on-screen menus via viewer input apparatus 28 or alternatively enter them via a keyboard. The corresponding data is retrieved from the program database in the STB and is displayed on the television screen. For example, if the user specifies that they want to view programs for tomorrow starting at 8:00 PM on all premium channels, the information for that time and set of channels would be displayed in the EPG on television 30 or Internet access apparatus 32.

Still further, the method of the present invention can include receiving a signal specifying a user preference for displaying EPG information, such as the desire to display or hide a program description, such as the name of the program episode, and displaying the EPG according to the user preference. Again, this preference can be selected from an on-screen menu via viewer input apparatus 28. The user preference is then stored in program database 40 to become the new default setting for display of the EPG.

While embodiments of the invention have been illustrated and described, it is not intended that these embodiments illustrate and describe all possible forms of the invention. Rather, the words used in the specification are words of description rather than limitation, and it is understood that various changes may be made without departing from the scope of the invention.

## Claims

1. A method for performing actions related to programming in an electronic program guide (EPG) for programs stored at one or more of a plurality of locations, the method comprising:
receiving a signal indicating the user's selection of a program displayed in the EPG (10);
receiving a signal specifying an action command to be applied to the selected program (12), the action command including determining if a plurality of stored copies of the selected program (12) are available at one or more of the said locations;
accessing at least one database for determining one or more locations of stored copies of the selected program available from PVR devices from owners other than the user; and
displaying a content window for the selected program which includes source and cost information from each location for selecting and viewing stored copies of the selected program (14), such that the user can select a specific stored copy of the selected program from a specific location for viewing.

2. The method according to claim 1, further including receiving a signal selecting a specific stored copy of the selected program.

3. The method according to claim 1 or claim 2, wherein accessing at least one database includes determining stored programs available from a programming source (24).

4. The method according to any of claims 1 to 3, wherein displaying the content window further includes providing a browser for displaying a web site related to the selected program.

5. The method according to any of claims 1 to 4, wherein displaying the content window further includes providing an e-mail client for sending an electronic mail to an address related to the selected program.

6. The method according to any of claims 1 to 5, further comprising receiving a signal specifying a subset of programming to be displayed in the EPG, and displaying the desired programming subset.

7. The method according to any of claims 1 to 6, further comprising receiving a signal specifying a user preference for displaying EPG information, and displaying the EPG according to the user preference.

8. A system for performing actions related to programming in an electronic program guide (EPG) for programs stored at one or more of a plurality of locations, the system comprising:
a viewer input apparatus (28) operable to generate signals indicating the user's selection of a program displayed in the EPG and an action command to be applied to the selected program, the action command including determining if a plurality of stored copies of the selected program are available at one or more of the said locations;
a set-top box (22) in communication with the viewer input apparatus (28) and operable to receive program signals from a programming source (24), the program signals including EPG data, wherein the set-top box (22) includes a program receiver (36) to receive the program signals, a viewer input receiver (42) for receiving signals from the viewer input apparatus (28), and a processor (38) in communication with the program receiver (36) and the viewer input receiver (42) to determine an appropriate content window to be displayed for the selected program; and
at least one database in communication with the processor (38) including one or more locations of stored copies of the selected program available from PVR devices from owners other than the user;
the content window including source information from each location for selecting and viewing stored copies of the selected program, such that the user can select a specific stored copy of the selected program from a specific location for viewing.

9. The system according to claim 8, wherein the at least one database includes information on stored programs available from the programming source (24).

10. The system according to claim 8 or claim 9, further including a modem in communication with the set-top box (22).

11. The system according to any of claims 8 to 10, wherein the viewer input apparatus includes a remote controller (28).

12. The system according to any of claims 8 to 11, further comprising a television for displaying the content window.

13. The system according to any of claims 8 to 12, further comprising an Internet access apparatus (32) for displaying the content window.

14. The system according to claim 13, further including a modem (34) in communication with the Internet access apparatus (32).

15. The system according to claim 13 or claim 14, wherein the viewer input apparatus includes a keyboard in communication with the Internet access apparatus (32).

## Patentansprüche

1. Verfahren zum Ausführen von Aktionen in Bezug auf die Programmierung in einem elektronischen Programmführer (EPG) für Programme, die an einem oder mehreren aus einer Mehrzahl von Orten gespeichert sind, wobei das Verfahren die folgenden Schritte beinhaltet:
Empfangen eines Signals, das die Auswahl eines in dem EPG (10) angezeigten Programms durch den Nutzer anzeigt;
Empfangen eines Signals, das einen Aktionsbefehl vorgibt, der auf das gewählte Programm (12) angewendet werden soll, wobei der Aktionsbefehl die Ermittlung beinhaltet, ob eine Mehrzahl von gespeicherten Kopien des gewählten Programms (12) an einem oder mehreren der genannten Orte zur Verfügung steht;
Zugreifen auf wenigstens eine Datenbank, um einen oder mehrere Orte von gespeicherten Kopien des gewählten Programms zu ermitteln, die von PVR-Geräten von anderen Besitzern als dem Nutzer zur Verfügung stehen; und
Anzeigen eines Inhaltsfensters für das gewählte Programm, das Quell- und Kosteninformationen von jedem Ort zum Wählen und Betrachten gespeicherter Kopien des gewählten Programms (14) beinhaltet, so dass der Nutzer eine bestimmte gespeicherte Kopie des gewählten Programms von einem speziellen Ort zum Betrachten wählen kann.

2. Verfahren nach Anspruch 1, das ferner das Empfangen eines Signals beinhaltet, das eine bestimmte gespeicherte Kope des gewählten Programms auswählt.

3. Verfahren nach Anspruch 1 oder Anspruch 2, wobei das Zugreifen auf wenigstens eine Datenbank das Ermitteln gespeicherter Programme beinhaltet, die von einer Programmierquelle (24) erhältlich sind.

4. Verfahren nach einem der Ansprüche 1 bis 3, wobei das Anzeigen des Inhaltsfensters ferner das Bereitstellen eines Browsers zum Anzeigen einer Website in Bezug auf das gewählte Programm beinhaltet.

5. Verfahren nach einem der Ansprüche 1 bis 4, wobei das Anzeigen des Inhaltsfensters ferner das Bereitstellen eines Email-Client zum Senden einer elektronischen Mail zu einer Adresse in Bezug auf das gewählte Programm beinhaltet.

6. Verfahren nach einem der Ansprüche 1 bis 5, das ferner das Empfangen eines Signals, das eine Programmierungsteilmenge vorgibt, die in dem EPG angezeigt werden soll, und das Anzeigen der gewünschten Programmierungsteilmenge beinhaltet.

7. Verfahren nach einem der Ansprüche 1 bis 6, das ferner das Empfangen eines Signals, das eine Nutzerpräferenz zum Anzeigen von EPG-Informationen vorgibt, und das Anzeigen des EPG gemäß der Nutzerpräferenz beinhaltet.

8. System zum Ausführen von Aktionen in Bezug auf die Programmierung in einem elektronischen Programmführer (EPG) für Programme, die an einem oder mehreren aus einer Mehrzahl von Orten gespeichert sind, wobei das System Folgendes umfasst:
eine Zuschauereingabevorrichtung (28) zum Erzeugen von Signalen, die die Auswahl eines auf dem EPG angezeigten Programms durch den Nutzer und einen Aktionsbefehl anzeigen, der auf das gewählte Programm anzuwenden ist, wobei der Aktionsbefehl das Ermitteln beinhaltet, ob eine Mehrzahl von gespeicherten Kopien des gewählten Programms an einem oder mehreren der genannten Orte verfügbar ist;
eine Set-Top-Box (22) in Verbindung mit der Zuschauereingabevorrichtung (28) zum Empfangen von Programmsignalen von einer Programmierquelle (24), wobei die Programmsignale EPG-Daten beinhalten, wobei die Set-Top-Box (22) einen Programmempfänger (36) zum Empfangen der Programmsignale, einen Zuschauereingabecmpfänger (42) zum Empfangen von Signalen von der Zuschauereingabevorrichtung (28) und einen Prozessor (38) in Verbindung mit dem Programmempfänger (36) und dem Zuschauereingabeempfänger (42) zum Ermitteln eines geeigneten Inhaltsfensters beinhaltet, das für das gewählte Programm angezeigt werden soll; und
wenigstens eine Datenbank in Verbindung mit dem Prozessor (38), die ein oder mehrere Orte von gespeicherten Kopien des gewählten Programms beinhaltet, die von PVR-Geräten von anderen Besitzern als dem Nutzer erhältlich sind;
wobei das Inhaltsfenster Quellinformationen von jedem Ort zum Auswählen und Betrachten gespeicherter Kopien des gewählten Programms aufweist, so dass der Nutzer eine bestimmte gespeicherte Kopie des gewählten Programms von einem bestimmten Ort zum Betrachten auswählen kann.

9. System nach Anspruch 8, wobei die wenigstens eine Datenbank Informationen über gespeicherte Programme beinhaltet, die von der Programmierquelle (24) erhältlich sind.

10. System nach Anspruch 8 oder Anspruch 9, das ferner ein Modem in Verbindung mit der Set-Top-Box (22) beinhaltet.

11. System nach einem der Ansprüche 8 bis 10, wobei die Zuschauereingubevorrichtung eine Fernsteuerung (28) umfasst.

12. System nach einem der Ansprüche 8 bis 11, das ferner einen Fernsehen zum Anzeigen des Inhaltsfensters umfasst.

13. System nach einem der Ansprüche 8 bis 12, das ferner eine Internetzugriffsvorrichtung (32) zum Anzeigen des Inhaltsfensters umfasst.

14. System nach Anspruch 13, das ferner ein Modem (34) in Verbindung mit der Internetzugriftsvorrichtung (32) umfasst.

15. System nach Anspruch 13 oder Anspruch 14, wobei die Zuschauereingabevorrichtung eine Tastatur in Verbindung mit der Internetzugriffsvorrichtung (32) umfasst.

## Revendications

1. Un procédé d'exécution d'actions relatives à des programmes d'un guide électronique de programmes (EPG) pour des programmes conservés dans un ou plusieurs emplacements d'une pluralité d'emplacements, le procédé comprenant :
la réception d'un signal indiquant la sélection par l'utilisateur d'un programme affiché dans l'EPG (10),
la réception d'un signal spécifiant une commande d'action à appliquer au programme sélectionné (12), la commande d'action incluant la détermination si une pluralité de copies conservées du programme sélectionné (12) sont disponibles dans un ou plusieurs desdits emplacements,
l'accès à au moins une base de données afin de déterminer un ou plusieurs emplacements des copies conservées du programme sélectionné disponibles auprès de dispositifs PVR (enregistreurs vidéo personnels) de propriétaires autres que l'utilisateur, et
l'affichage d'une fenêtre de contenu pour le programme sélectionné qui contient des informations de source et de coût provenant de chaque emplacement pour la sélection et le visionnage de copies conservées du programme sélectionné (14), de sorte que l'utilisateur puisse sélectionner une copie conservée spécifique du programme sélectionné à partir d'un emplacement spécifique pour visionnage.

2. Le procédé selon la Revendication 1, comprenant en outre la réception d'un signal sélectionnant une copie conservée spécifique du programme sélectionné.

3. Le procédé selon la Revendication 1 ou 2, où l'accès à au moins une base de données comprend la détermination des programmes conservés disponibles à partir d'une source de programmes (24).

4. Le procédé selon l'une quelconque des Revendications 1 à 3, où l'affichage de la fenêtre de contenu comprend en outre la fourniture d'un navigateur destiné à l'affichage d'un site web lié au programme sélectionné.

5. Le procédé selon l'une quelconque des Revendications 1 à 4, où l'affichage de la fenêtre de contenu comprend en outre la fourniture d'un client de messagerie électronique destiné à l'envoi d'un message électronique à une adresse liée au programme sélectionné.

6. Le procédé selon l'une quelconque des Revendications 1 à 5 comprenant en outre la réception d'un signal spécifiant un sous-ensemble de programmes à afficher dans l'EPG et l'affichage du sous-ensemble de programmes souhaité.

7. Le procédé selon l'une quelconque des Revendications 1 à 6 comprenant en outre la réception d'un signal spécifiant une préférence utilisateur pour l'affichage des informations d'EPG et l'affichage de l'EPG selon la préférence utilisateur.

8. Un système destiné à l'exécution d'actions relatives à des programmes d'un guide électronique de programmes (EPG) pour des programmes conservés dans un ou plusieurs emplacements d'une pluralité d'emplacements, le système comprenant :
un appareil d'entrée de téléspectateur (28) actionnable de façon à générer des signaux indiquant la sélection par un utilisateur d'un programme affiché dans l'EPG et une commande d'action à appliquer au programme sélectionné, la commande d'action incluant la détermination si une pluralité de copies conservées du programme sélectionné sont disponibles dans un ou plusieurs desdits emplacements,
un décodeur (22) en communication avec l'appareil d'entrée de téléspectateur (28) et actionnable de façon à recevoir des signaux de programme provenant d'une source de programmes (24), les signaux de programme contenant des données EPG, où le décodeur (22) comprend un récepteur de programmes (36) destiné à recevoir les signaux de programme, un récepteur d'entrée de téléspectateur (42) destiné à recevoir des signaux provenant de l'appareil d'entrée de téléspectateur (28) et un processeur (38) en communication avec le récepteur de programmes (36) et le récepteur d'entrée de téléspectateur (42) de façon à déterminer une fenêtre de contenu appropriée à afficher pour le programme sélectionné, et
au moins une base de données en communication avec le processeur (38) contenant un ou plusieurs emplacements de copies conservées du programme sélectionné disponibles auprès de dispositifs PVR de propriétaires autres que l'utilisateur,
la fenêtre de contenu contenant des informations de source et provenant de chaque emplacement pour la sélection et le visionnage de copies conservées du programme sélectionné, de sorte que l'utilisateur puisse sélectionner une copie conservée spécifique du programme sélectionné à partir d'un emplacement spécifique pour visionnage.

9. Le système salon la Revendication 8, où la au moins une base de données comprend des informations sur des programmes conservés disponibles à partir de la source de programmes (24).

10. Le système selon la Revendication 8 ou 9, comprenant en outre un modem en communication avec le décodeur (22).

11. Le système selon l'une quelconque des Revendications 8 à 10 où l'appareil d'entrée de téléspectateur comprend une télécommande (28).

12. Le système selon l'une quelconque des Revendications 8 à 11 comprenant en outre un poste de télévision pour l'affichage de la fenêtre de contenu.

13. Le système selon l'une quelconque des Revendications 8 à 12 comprenant en outre un appareil d'accès à l'Internet (32) pour l'affichage de la fenêtre de contenu.

14. Le système selon la Revendication 13 comprenant en outre un modem (34) en communication avec l'appareil d'accès à l'Internet (32).

15. Le système selon la Revendication 13 ou 14 où l'appareil d'entrée de téléspectateur comprend un clavier en communication avec l'appareil d'accès à l'Internet (32).
